# FASCICULE DE BREVET EUROPEEN

(11) **EP 0 565 436 B1**
(45) Date de publication et mention de la délivrance du brevet: **12.06.1996**
(21) Numéro de dépôt: 93400894.7
(22) Date de dépôt: 06.04.1993
(51) Int. Cl.: B60S 1/34, B60S 1/58

(54) **Bras d'essuie-glace**
Wischerarm
Wiperarm

(30) Priorité: 08.04.1992 FR 9204296
(43) Date de publication de la demande: 13.10.1993
(73) Titulaire: VALEO SYSTEMES D'ESSUYAGE, 78321 La Verrière (FR)
(72) Inventeur: Schon, Wilfrid, F-63580 Saint Etienne/Usson (FR)
(74) Mandataire: Schrimpf, Robert

(56) Documents cités:
- EP-A- 0 479 659
- DE-U- 9 107 295
- FR-A- 2 103 349
- GB-A- 2 188 537
- GB-A- 2 231 780
- US-A- 2 071 310

## Description

La présente invention concerne le domaine des essuie-glace, et vise plus particulièrement un bras d'essuie-glace pour véhicule automobile du type divulgué dans GB-A-2 188 537.

Il est connu des bras d'essuie-glace comportant une tête d'entraînement sur laquelle est articulé un porte-balai, ledit porte-balai portant un balai muni d'une raclette propre à venir au contact d'une surface à essuyer.

Ces bras comportent, en outre, un système élastique interposé entre le porte-balai et la tête d'entraînement de façon à presser, au cours du fonctionnement de l'essuie-glace, la raclette sur la surface à essuyer.

Sur certains véhicules munis d'un essuie-glace monté sur la lunette arrière, le balai est lié de façon inamovible au bras et constitue ce que l'homme de l'art appelle communément un bras-balai-intégral (BBI).

Sur ce type de bras d'essuie-glace, le porte-balai est également lié de façon inamovible à la tête d'entraînement et au système élastique.

Ainsi, en cas d'usure du balai, un bras-balai-intégral selon l'art antérieur présente l'inconvénient de nécessiter le remplacement complet du bras, tête d'entraînement comprise.

De plus, sur certains types d'essuie-glace, la tête d'entraînement est couplée à un arbre d'entraînement de l'essuie-glace par l'intermédiaire d'une liaison à vis et écrou, et un usager désirant effectuer le remplacement du bras doit se munir en conséquence d'un outil approprié, qui n'est pas toujours immédiatement disponible.

On a proposé dans la publication GB-A-2 188 537 un bras d'essuie-glace comportant une tête d'entraînement susceptible d'être entraînée en rotation autour d'un axe d'entraînement, un porte-balai articulé sur ladite tête autour d'un axe de débattement perpendiculaire audit axe d'entraînement, supportant un balai muni d'une raclette destinée à venir au contact d'une surface à essuyer, un système élastique interposé entre le porte-balai et la tête d'entraînement, adapté à presser la raclette sur ladite surface, le porte-balai étant lié de façon amovible au système élastique et à la tête d'entraînement. Le système élastique comporte un ressort travaillant en traction, accroché à une extrémité à la tête d'entraînement et à l'autre extrémité au porte-balai. Ce bras d'essuie-glace connu présente l'inconvénient que le ressort doit être décroché pour pouvoir procéder au remplacement du porte-balai.

On a proposé dans le brevet US-A-2 071 310 un bras d'essuie-glace comportant un porte-balai entraîné en rotation par une extrémité recourbée d'un arbre d'entraînement. Le porte-balai comprend un carter maintenu en place sur ladite extrémité recourbée par un ressort enfilé sur cette dernière et travaillant en compression. Le ressort s'appuie à une extrémité sur l'arbre d'entraînement et agit à l'autre extrémité sur une pièce en forme de L, engagée sur l'extrémité recourbée de l'arbre d'entraînement et présentant des tourillons venant en prise dans des fentes en baïonnette du carter. Ce bras d'essuie-glace, qui est d'un type ancien, ne permet pas un débattement angulaire important du porte-balai pour épouser la courbure de la surface à essuyer et n'est pas adapté à une utilisation sur des véhicules modernes, pour lesquels les surfaces à essuyer peuvent présenter une courbure importante. En outre, le remplacement du porte-balai nécessite de dégager manuellement les tourillons des fentes en baïonnette et l'opérateur effectuant le changement du porte-balai doit utiliser ses deux mains, l'une pour maintenir le porte-balai et l'autre pour déplacer la pièce en forme de L.

On a proposé dans la publication GB-A-2 231 780 un bras d'essuie-glace comprenant un système élastique incorporant un ressort travaillant en compression et monté sur une tige guide-ressort articulée sur la tête d'entraînement. Toutefois, dans ce bras d'essuie-glace connu, le porte-balai est riveté sur la tête d'entraînement et le remplacement du porte-balai ne peut s'effectuer aisément sans l'aide d'un outil.

La présente invention a pour but de proposer un bras d'essuie-glace remédiant aux inconvénients des bras d'essuie-glace connus, et notamment un bras d'essuie-glace dont le remplacement du porte-balai puisse s'effectuer aisément d'une seule main. Plus particulièrement, l'invention a pour objet un bras d'essuie-glace du type comportant une tête d'entraînement susceptible d'être entraînée en rotation autour d'un axe d'entraînement, un porte-balai articulé sur ladite tête d'entraînement, supportant un balai muni d'une raclette destinée à venir au contact d'une surface à essuyer, un système élastique interposé entre le porte-balai et la tête d'entraînement, adapté à presser la raclette sur ladite surface, le porte-balai étant lié de façon amovible au système élastique et à la tête d'entraînement, le système élastique comprenant un ressort.

De façon caractéristique de l'invention, qui a trait à un bras du type divulgué dans GB-A-2 188 537, le ressort travaille en compression et est engagé sur une tige guide-ressort articulée sur la tête d'entraînement autour d'un axe transversal parallèle à l'axe de débattement, l'axe transversal étant fixe relativement à la tête d'entraînement.

Ainsi, dans l'invention, la tête d'entraînement reste avantageusement en place lors du remplacement du porte-balai et de son balai associé, et l'usager effectuant cette opération n'a plus besoin d'outil. De plus, en ne remplaçant que le balai et le porte-balai, le coût de la pièce de rechange est réduit de manière significative.

De préférence, le système élastique est lié de façon inamovible à la tête d'entraînement.

La tige guide-ressort comporte avantageusement un corps cylindrique allongé, prolongé à une extrémité par une embase articulée sur la tête d'entraînement autour d'un axe transversal parallèle à l'axe de débattement, ledit corps cylindrique étant engagé à l'autre extrémité dans un logement prévu sur une cloison portée par le porte-balai, le ressort s'appuyant à une extrémité sur une face de l'embase et à l'autre extrémité sur une face de la cloison.

De préférence, l'axe transversal de l'articulation de l'embase sur la tête d'entraînement est plus éloigné de l'axe d'entraînement que ne l'est l'axe de débattement.

Selon un mode de réalisation avantageux de l'invention, le porte-balai comporte une section en "U" renversé comprenant deux ailes latérales, prolongées à une extremité en direction de la tête d'entraînement par deux pattes portant un tourillon transversal, apte à servir de pivot à l'articulation entre le porte-balai et la tête d'entraînement autour dudit axe de débattement.

Selon un autre mode de réalisation avantageux de l'invention, la tête d'entraînement comporte une semelle munie d'un alésage propre à recevoir un arbre d'entraînement, prolongée en direction du porte-balai par un bec comprenant une gorge débouchant en regard de l'axe d'entraînement, destinée à recevoir ledit tourillon transversal.

Un bras d'essuie-glace conforme à l'invention équipe avantageusement une lunette arrière de véhicule automobile.

D'autres caractéristiques et avantages de la présente invention apparaîtront à la lecture de la description détaillée qui va suivre, non limitative de l'invention, et au vu du dessin annexe sur lequel :
- la figure 1 est une coupe longitudinale partielle d'un bras d'essuie-glace conforme à l'invention,
- la figure 2 est une vue partielle du porte-balai selon le trait de coupe II-II de la figure 1,
- la figure 3 est une vue de côté, partielle, d'un bras d'essuie-glace conforme à la figure 1,
- la figure 4 est une vue en perspective schématique de la tête d'entraînement,
- la figure 5 est une vue selon le trait de coupe V-V de la figure 1,
- la figure 6 est une vue selon le trait de coupe VI-VI de la figure 1.

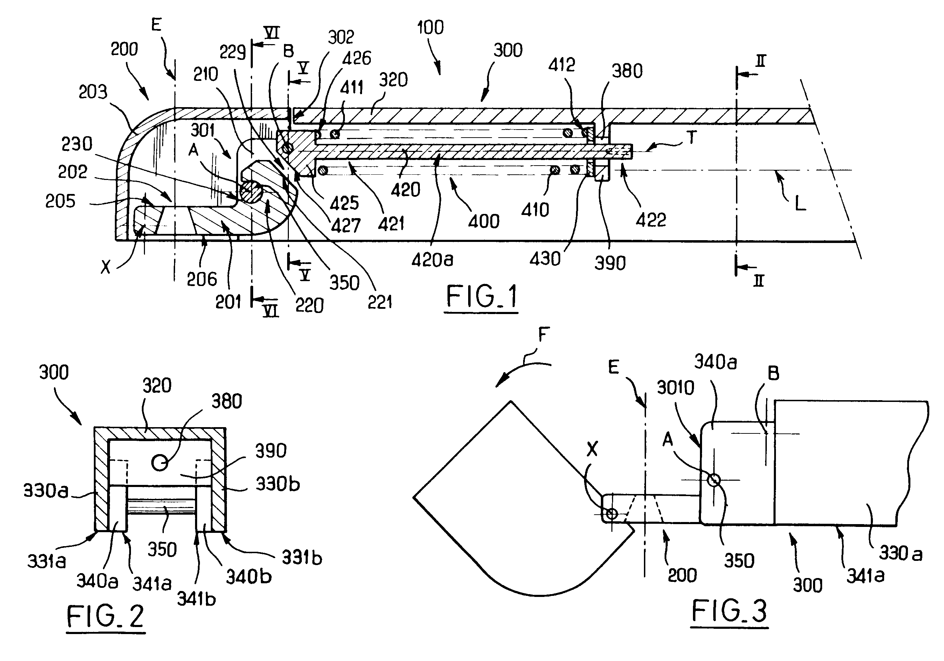

On a représenté sur la figure 1 en coupe longitudinale partielle un bras d'essuie-glace conforme à l'invention. Le bras, référencé 100 dans son ensemble, comprend à sa base une tête d'entraînement 200 susceptible d'être couplée à des moyens d'entraînement connus en eux-mêmes, et non représentés, pour l'entraîner en rotation autour d'un axe d'entraînement E. L'axe E est contenu dans le plan de coupe de la figure 1. Le bras 100 comprend un porte-balai 300 s'étendant longitudinalement à partir de la tête d'entraînement 200 dans la direction d'un axe longitudinal L, également contenu dans le plan de la coupe de la figure 1.

La tête d'entraînement 200 peut être couplée aux moyens d'entraînement de nombreuses façons connues de l'homme de l'art. De préférence, la tête d'entraînement 200 comprend une semelle 201 comportant une face supérieure 205 et une face inférieure 206, globalement rectangulaires, planes et parallèles, la face 205 étant tournée, lorsque l'essuie-glace est monté sur le véhicule, vers l'extérieur tandis que la face 206 est tournée vers le véhicule. La semelle 201 est munie d'un alésage 202 d'axe perpendiculaire à ces deux faces centré sur l'axe E. L'alésage 202, tronconique dans l'exemple de réalisation décrit, reçoit par l'ouverture de plus grand diamètre débouchant sur la face inférieure 206 un arbre d'entraînement, non représenté. L'arbre d'entraînement est avantageusement muni d'un filetage et la semelle 201 couplée en rotation avec celui-ci par serrage d'un ou de plusieurs écrous engagés sur ce filetage. La semelle 201 se prolonge sur un côté en direction du porte-balai 300 pour former un bec 220 propre à s'articuler de façon amovible sur une extrémité 301 du porte-balai 300.

Le porte-balai 300 porte à l'extrémité opposée à l'extrémité 301 un balai de type connu en soi et non représenté. Ce balai est, dans le cas d'un bras-balai-intégral, lié de façon inamovible au porte-balai 300.

Le balai est muni d'une raclette propre à s'appliquer sur la surface à essuyer. Cette raclette est habituellement portée par un système de palonniers montés de façon articulée aux extrémités d'une armature de balai.

En se référant à la figure 2, on remarque que le porte-balai 300 présente une section principale ayant la forme d'un "U" renversé, comprenant deux ailes latérales 330a, 330b, raccordées perpendiculairement à un dos 320.

La section principale se prolonge en direction de la tête 200 par deux pattes 340a et 340b se raccordant sur les faces internes, en regard, des ailes 330a et 330b. Les pattes 340a et 340b ont une hauteur moindre que les ailes 330a, 330b de la section principale. Les pattes 340a et 340b sont planes et parallèles aux ailes 330a et 330b, et ont un bord libre inférieur 341a, 341b respectivement aligné avec le bord libre 331a et 331b des ailes 330a et 330b.

Un tourillon 350 s'étend entre les pattes 340a et 340b dans la direction d'un axe de débattement A, perpendiculaire au plan des pattes 340a, 340b et à l'axe E, destiné à servir de pivot à l'articulation entre la tête d'entraînement 200 et le porte-balai 300.

A cet effet, le tourillon 350 est propre à être reçu, de façon amovible, dans une gorge 230 prévue sur le bec 220, pour former une articulation entre la tête d'entraînement 200 et le porte-balai 300.

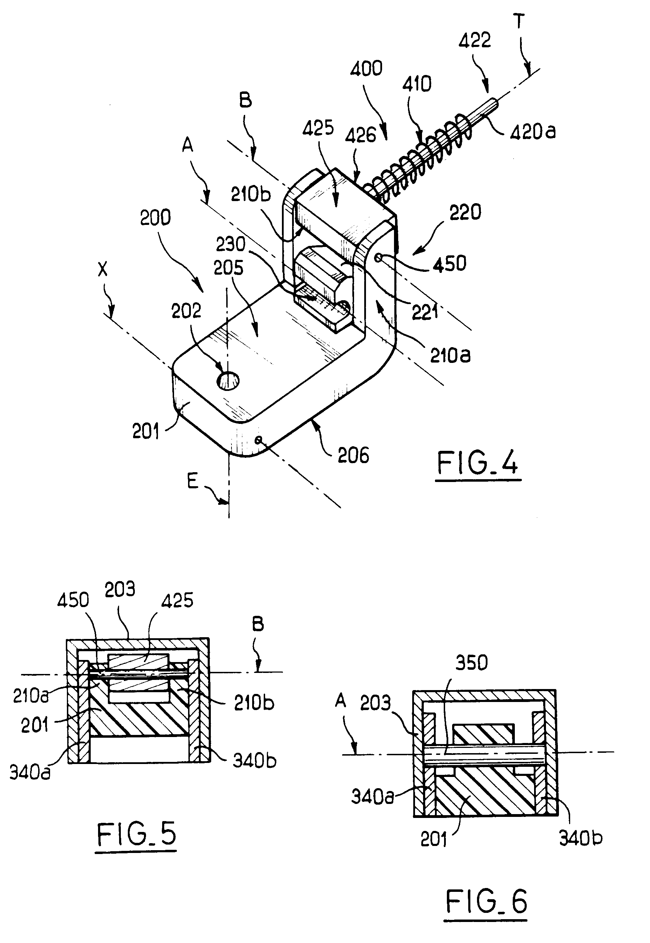

En se référant aux figures 1 et 4, on remarque que la gorge 230 s'étend perpendiculairement à l'axe E et présente un profil ayant la forme d'un "U" couché, ouvert vers l'axe E, dont les branches sont sensiblement parallèles au plan de la face 205. La gorge 230 débouche à proximité de la face 205, de sorte que la branche inférieure du profil en "U" est pratiquement située dans le prolongement de la surface 205.

Lorsque le tourillon 350 est engagé dans la gorge 230, le porte-balai 300 est couplé en rotation avec la tête d'entraînement 200 autour de l'axe E, tout en restant libre de rotation par rapport à la tête d'entraînement 200 autour de l'axe de débattement A.

En se référant plus particulièrement à la figure 1, on voit qu'un système élastique 400 est interposé entre la tête d'entraînement 200 et le porte-balai 300, en vue d'exercer un couple autour de l'axe A, dans le sens horaire sur cette figure.

Ce couple sert à presser le balai contre la surface à essuyer, de préférence une lunette arrière de véhicule automobile.

On remarquera à l'examen des figures 1 et 3 que la tête d'entraînement 200 comporte de plus un capuchon 203, monté pivotant sur la semelle 201 autour d'un axe X, parallèle à l'axe A. Le capuchon 203 vient recouvrir, dans la position de la figure 1, la tête d'entraînement 200 et les pattes 340a et 340b du porte-balai 300, de sorte que la surface extérieure du capuchon 203 se situe dans le prolongement de la surface externe des ailes 330a, 330b et du dos 320.

Selon une caractéristique de l'invention, le système élastique 400 est relié de façon amovible au porte-balai 300.

On peut envisager plusieurs variantes de réalisation du système élastique 400 sans sortir du cadre de la présente invention, mais on préfèrera utiliser un système élastique 400 comprenant un ressort 410 travaillant en compression.

Ainsi, si l'une des spires du ressort 410 est défectueuse, les spires restantes continuent à exercer leur effet et le ressort 410 ne perd qu'une faible partie de son efficacité. Par ailleurs, pour éviter tout phénomène de flambage, le ressort 410 est monté sur une tige guide-ressort 420.

La tige guide-ressort 420 présente essentiellement un corps 420a de forme cylindrique en section, allongé dans la direction d'un axe T. Le corps 420a se raccorde à une extrémité 421 sur une embase 425. L'extrémité opposée 422 du corps 420a est engagée dans une ouverture 380, cylindrique de préférence, prévue au centre d'une cloison 390 solidaire du porte-balai 300.

La cloison 390 se raccorde perpendiculairement sur le dos 320 du porte-balai 300 et sur les ailes 330a et 330b, comme illustré sur la figure 2.

L'embase 425 présente, au niveau de la jonction avec le corps 420a, une face plane 426, s'étendant perpendiculairement à l'axe T.

Le ressort 410 engagé sur le corps 420a prend appui à ses extrémités 411 et 412 respectivement sur la face 426 et sur une rondelle 430, interposée entre le ressort 410 et une face de la cloison 390.

De préférence, l'extrémité 411 du ressort est attachée, par des moyens appropriés à l'embase 425.

L'embase 425 est articulée sur la tête d'entraînement 200 autour d'un axe B, parallèle à l'axe de débattement A. A cet effet, elle est traversée dans une direction perpendiculaire à l'axe T par un tourillon 450 engagé à ses extrémités dans une chape 210 prévue sur le bec 220.

Le détail de la liaison entre la tige guide-ressort 420 et la tête d'entraînement 200 est visible en perspective sur la figure 4 et en coupe sur la figure 5, dont le plan de coupe perpendiculaire à l'axe T contient l'axe B.

On remarque à l'examen de ces figures deux montants 210a et 210b s'étendant perpendiculairement à l'axe B pour former la chape 210 recevant le tourillon 450 et l'embase 425. Les montants 210a, 210b se raccordent perpendiculairement sur la face 205 de la semelle 201.

Afin que le système élastique exerce un couple dirigé dans le sens horaire sur la figure 1, en vue de presser le balai sur la surface à essuyer, l'axe B doit être disposé au-dessus de l'axe A, c'est-à-dire plus éloigné du plan de la face 205 que ne l'est l'axe A. Pour autoriser un débattement de la tige guide-ressort 420 autour de l'axe B, dans le sens anti-horaire en référence à la figure 1, et permettre à un utilisateur de relever le bras d'essuie-glace afin de dégager la surface à essuyer, un espace suffisant 229 doit être ménagé entre l'embase 425 et le bec 220.

Avantageusement, l'embase 425 et le bec 220 comportent respectivement un chanfrein 427 et un chanfrein 221, sensiblement parallèles entre eux lorsque le bras est dans sa position de fonctionnement, conformément à la figure 1.

Le porte-balai 300 est apte à être relevé de plus de 90° dans le sens anti-horaire de la figure 1 pour atteindre une position débrayée, afin de dégager complètement la surface à essuyer. L'axe B est plus éloigné de l'axe E que ne l'est l'axe A de façon à pouvoir exercer un couple tendant à maintenir le porte-balai 300 dans sa position débrayée.

On notera que l'on prévoit un espace suffisant entre le bord libre du capuchon 203 et l'extrémité du dos 320 pour permettre de relever le porte-balai 300 sans avoir à faire pivoter le capuchon 203 pour découvrir la tête d'entraînement 200.

Lorsque le porte-balai 300 est assemblé en position de fonctionnement sur la tête d'entraînement 200, comme cela est le cas sur les figures 1 à 6, le ressort 410 est comprimé et exerce un couple de rappel qui presse le balai contre la surface à essuyer tout en maintenant calé dans le fond de la gorge 230 le tourillon 350.

Pour retirer le porte-balai 300, on commence par dégager le capuchon 203 par pivotement autour de l'axe X, dans le sens de la flèche F en référence à la figure 3.

Ensuite, on relève le porte-balai 300 depuis sa position de travail où il applique le balai sur la surface à essuyer par pivotement de 90° environ autour de l'axe A dans le sens anti-horaire sur la figure 3. Puis on dégage le tourillon 350 hors de la gorge 230 en faisant pivoter le porte-balai dans le sens horaire autour d'un axe fictif situé à l'extrémité du porte-balai opposée à l'extrémité 301. Une fois le tourillon 350 libéré de la gorge 230 il suffit d'entraîner le porte-balai dans un mouvement de translation vers le haut.

Lors de ce mouvement vers le haut la tige guide-ressort 420 coulisse dans l'ouverture 380 jusqu'à quitter celle-ci et le porte-balai 300 est complètement retiré. Dans le cas où l'extrémité 411 du ressort 410 n'est pas attachée à la tige guide-ressort 420, on veillera à effectuer cette dernière opération avec lenteur, de façon à éviter que le ressort 410 ne soit libéré brutalement et ne bondisse hors de la tige 420.

Pour monter un porte-balai 300 sur une tête d'entraînement 200 conformément à l'invention, on effectue les opérations précédentes dans l'ordre inverse. On commence par engager la tige guide-ressort 420 par l'extrémité 422 dans l'ouverture 380 de la cloison 390, porte-balai 300 positionné dans sa position relevée, puis on comprime le ressort 410 dans un mouvement de translation vers le bas jusqu'à pouvoir insérer le tourillon 350 dans la gorge 230. Ensuite, on rabat le porte-balai vers la surface à essuyer en faisant pivoter le porte-balai autour de l'axe A dans le sens horaire de la figure 3 en veillant bien à ce que le tourillon 350 reste engagé dans la gorge 230.

Un bras d'essuie-glace conforme à l'invention apparaît finalement comme permettant de remplacer facilement, à moindre coût, l'ensemble balai et porte-balai 300 sans avoir à démonter la liaison entre la tête d'entraînement 200 et les moyens d'entraînement de l'essuie-glace.

## Revendications

1. Bras (100) d'essuie-glace comportant une tête d'entraînement (200) susceptible d'être entraînée en rotation autour d'un axe d'entraînement (E), un porte-balai (300) articulé sur ladite tête (200) autour d'un axe de débattement (A) perpendiculaire audit axe d'entraînement (E), supportant un balai muni d'une raclette destinée à venir au contact d'une surface à essuyer, un système élastique comprenant un ressort interposé entre le porte-balai (300) et la tête d'entraînement (200), adapté à presser la raclette sur ladite surface, le porte-balai (300) étant lié de façon amovible au système élastique et à la tête d'entraînement, caractérisé en ce que le ressort (410) travaille en compression et est engagé sur une tige guide-ressort (420) articulée sur la tête d'entraînement (200) autour d'un axe transversal (B) parallèle à l'axe de débattement (A), l'axe transversal (B) étant fixe relativement à la tête d'entraînement.

2. Bras d'essuie-glace selon la revendication 1, caractérisé en ce que le système élastique (400) est lié de façon inamovible à la tête d'entraînement.

3. Bras d'essuie-glace selon l'une des revendications 1 et 2, caractérisé en ce que la tige guide-ressort (420) comporte un corps cylindrique allongé (420a), prolongé à une extrémité (421) par une embase (425), cette embase étant articulée sur la tête d'entraînement (200), ledit corps cylindrique étant engagé à l'autre extrémité (422) dans un logement (380) prévu sur une cloison (390) portée par le porte-balai (300), de sorte que le ressort (410) s'appuie à une extrémité (411) sur une face (426) de l'embase (425) et à l'autre extrémité (412) sur une face de la cloison (390).

4. Bras d'essuie-glace selon l'une des revendications 1 à 3, caractérisé en ce que l'axe transversal (B) est plus éloigné de l'axe d'entraînement (E) que ne l'est l'axe de débattement (A).

5. Bras d'essuie-glace selon l'une des revendications 1 à 4, caractérisé en ce que le porte-balai (300) comporte une section en "U" renversé comprenant deux ailes latérales (330a, 330b) prolongées à une extrémité (301) en direction de la tête d'entraînement (200) par deux pattes (340a, 340b) portant un tourillon transversal (350), apte à servir de pivot à l'articulation entre le porte-balai et la tête d'entraînement autour dudit axe de débattement (A).

6. Bras d'essuie-glace selon la revendication 5, caractérisé en ce que la tête d'entraînement comporte une semelle (201) munie d'un alésage (202) propre à recevoir un arbre d'entraînement, prolongée en direction du porte-balai (300) par un bec (220) comprenant une gorge (230) débouchant en regard de l'axe d'entraînement (E) et destinée à recevoir ledit tourillon transversal (350).

7. Bras d'essuie-glace selon l'une des revendications 1 à 6, caractérisé en ce que la surface à essuyer est une lunette arrière de véhicule automobile.

## Claims

1. A windscreen wiper arm (100) comprising a drive head (200) capable of being driven to rotate about a drive axis (E), a wiper blade carrier (300) pivotally mounted on said head (200) about a deflection axis (A) perpendicular to said drive axis (E), the carrier supporting a wiper blade provided with a scraper intended to make contact with a surface to be wiped, a resilient system including a spring interposed between the wiper blade carrier (300) and the drive head (200), intended for pressing the scraper against said surface, the wiper blade carrier (300) being removably connected to the resilient system and to the drive head, the arm being characterized in that the spring (410) operates in compression and is engaged on a spring-guiding rod (420) pivotally mounted on the drive head (200) about a transverse axis (B) parallel to the deflection axis (A), the transverse axis (B) being fixed relative to the drive head.

2. A windscreen wiper arm according to claim 1, characterized in that the resilient system (400) is connected to the drive head in non-removable manner.

3. A windscreen wiper arm according to either claim 1 or claim 2, characterized in that the spring-guiding rod (420) comprises an elongate cylindrical body (420a), extended at one end (421) by a shoulder (425), the shoulder being pivotally mounted on the drive head (200), the other end (422) of said cylindrical body being engaged in a seating (380) provided on a partition (390) carried on the wiper blade carrier (300), so that one end (411) of the spring (410) bears against a face (426) of the shoulder (425) and the other end (412) bears against a face of the partition (390).

4. A windscreen wiper arm according to any of claims 1 to 3, characterized in that the transverse axis (B) is further from the drive axis (E) than is the deflection axis (A).

5. A windscreen wiper arm according to any of claims 1 to 4, characterized in that the cross-section of the wiper blade carrier (300) is in the form of an upside-down U including two lateral flanges (330a, 330b) extended at one end (301) towards the drive head (200) by two tabs (340a, 340b) carrying a transverse journal (350) which is suitable for acting as a pivot for the pivotal connection between the wiper blade carrier and the drive head about said deflection axis (A).

6. A windscreen wiper arm according to claim 5, characterized in that the drive head includes a sole plate (201) provided with a bore (202) suitable for receiving a drive shaft, the sole plate being extended towards the wiper blade carrier (300) by a tip (220) including a groove (230) which opens towards the drive axis (E) and which is intended to receive said transverse journal (350).

7. A windscreen wiper arm according to any of claims 1 to 6, characterized in that the surface to be wiped is a rear window of a motor vehicle.

## Patentansprüche

1. Wischerarm (100) mit einem Antriebskopf (200), der drehend um eine Antriebsachse (E) angetrieben werden kann, einem Wischblatthalter (300), der mit dem besagten Antriebskopf (200) gelenkig um eine senkrecht zu der besagten Antriebsachse (E) angeordnete Auslenkachse (A) verbunden ist und der ein Wischblatt trägt, das mit einem auf der zu wischenden Fläche angedrückten Wischergummi versehen ist, und einem elastischen System mit einer Feder, die zwischen dem Wischblatthalter (300) und dem Antriebskopf (200) eingesetzt ist, um den Wischergummi auf der besagten Fläche anzudrücken, wobei der Wischblatthalter (300) abnehmbar mit dem elastischen System und mit dem Antriebskopf verbunden ist, **dadurch gekennzeichnet,** daß die Feder (410) auf Druck arbeitet und an einem Federführungsstift (420) angebracht ist, der mit dem Antriebskopf (200) gelenkig um eine parallel zur Auslenkachse (A) angeordnete Querachse (B) verbunden ist, wobei die Querachse (B) im Verhältnis zum Antriebskopf feststehend ausgeführt ist.

2. Wischerarm nach Anspruch 1 , **dadurch gekennzeichnet,** daß das elastische System (400) nicht abnehmbar mit dem Antriebskopf verbunden ist.

3. Wischerarm nach einem der Ansprüche 1 und 2 , **dadurch gekennzeichnet,** daß der Federführungsstift (420) einen länglichen zylindrischen Schaft (420a) umfaßt, der an einem Ende (421) durch ein Sockelstück (425) verlängert wird, das mit dem Antriebskopf (200) gelenkig verbunden ist, wobei der besagte zylindrische Schaft am anderen Ende (422) in eine Aufnahme (380) eingreift, die an einer am Wischblatthalter (300) angebrachten Trennwand (390) vorgesehen ist, so daß die Feder (410) an einem Ende (411) auf einer Fläche (426) des Sockelstücks (425) und am anderen Ende (412) auf einer Fläche der Trennwand (390) anliegt.

4. Wischerarm nach einem der Ansprüche 1 bis 3 , **dadurch gekennzeichnet,** daß die Querachse (B) weiter von der Antriebsachse (E) entfernt ist als die Auslenkachse (A).

5. Wischerarm nach einem der Ansprüche 1 bis 4 , **dadurch gekennzeichnet,** daß der Wischblatthalter (300) einen Querschnitt in umgekehrter "U"-Form mit zwei Seitenschenkeln (330a, 330b) aufweist, die an einem Ende (301) in Richtung des Antriebskopfes (200) durch zwei Ansätze (340a, 340b) verlängert werden, die einen Querzapfen (350) tragen, der als Gelenkzapfen für die Gelenkverbindung zwischen dem Wischblatthalter und dem Antriebskopf um die besagte Auslenkachse (A) dienen kann.

6. Wischerarm nach Anspruch 5 , **dadurch gekennzeichnet,** daß der Antriebskopf ein Fußstück (201) mit einer Bohrung (202) für das Einsetzen einer Antriebswelle umfaßt, das in Richtung des Wischblatthalters (300) durch ein Endstück (220) verlängert wird, das eine Auskehlung (230) aufweist, die gegenüber der Antriebsachse (E) mündet und für die Aufnahme des besagten Querzapfens (350) bestimmt ist.

7. Wischerarm nach einem der Ansprüche 1 bis 6 , **dadurch gekennzeichnet,** daß es sich bei der zu wischenden Fläche um die Heckscheibe eines Kraftfahrzeugs handelt.
